# EUROPEAN PATENT APPLICATION

(11) **EP 4 726 877 A1**
(43) Date of publication of application: **15.04.2026**
(21) Application number: 25199585.8
(22) Date of filing: 02.09.2025
(51) Int. Cl.: H01M 50/202, H01M 50/213, H01M 50/244, H01M 50/258, H01M 50/503

(54) **BATTERY PACK AND METHOD FOR MANUFACTURING BATTERY PACK**

(30) Priority: 13.09.2024 KR 20240125943
(71) Applicant: SAMSUNG SDI CO., LTD., Yongin-si, Gyeonggi-do 17084 (KR)
(72) Inventor: PARK, Sanghun, 17084 Yongin-si (KR)
(74) Representative: Marks & Clerk LLP

(57) **Abstract**

A battery cell holder (100) to mount a battery cell (1) therein and a battery pack are disclosed. The battery cell holder may include a first body (110) at an upper portion and a lower portion of the battery cell, having a first set of exposure grooves to expose a first electrode terminal and a second electrode terminal of the battery cell, and extending around a side of the battery cell; a second body (120) coupled to the first body (110), at the upper portion and the lower portion of the battery cell, having a second set of exposure grooves to expose the first electrode terminal and the second electrode terminal of the battery cell, and extending around another side of the battery cell; a first electrode tab (130) that contacts a first electrode terminal of the battery cell; and a second electrode tab (140) that contacts a second electrode terminal of the battery cell.

## Description

### BACKGROUND

### 1. Field

One or more embodiments of the present disclosure relate to a battery cell holder and a battery pack, and, for example, to a battery cell holder including a first body and a second body that are coupled to a side of a battery cell and a battery pack.

### 2. Description of the Related Art

Unlike primary batteries that are not designed to be charged, secondary batteries are designed to be discharged and recharged. Low-capacity secondary batteries are used in small portable electronic devices, such as smart phones, feature phones, notebook computers, digital cameras, camcorders, and/or the like, while large-capacity secondary batteries are used as a driving power source for hybrid vehicles and/or electric vehicles and/or a power storage source for energy storage systems (ESSs). The secondary batteries include an electrode assembly that consists of a positive electrode and a negative electrode, a case that accommodates the electrode assembly, a terminal part connected to the electrode assembly, and/or the like.

In the case of a battery pack that utilizes a secondary battery, a desired power system is secured or provided by interconnecting a plurality of battery cells, which depends on a type or kind of device that is applied. In the case of a cylindrical secondary battery, if (e.g., when) a battery pack is configured or provided, a fixing device, such as a holder to maintain the arrangement structure of a plurality of battery cells, is desired or required due to the characteristics of a battery shape. Accordingly, in configuring or arranging a battery pack that utilizes a cylindrical battery, there is a problem in that fixing devices having one or more standards need to be manufactured depending on the number of batteries to be assembled.

The foregoing information disclosed in this Background section is for enhancement of understanding of the background of the present disclosure, and therefore, it may contain information that does not constitute related art.

### SUMMARY

One or more aspects of embodiments of the present disclosure are directed toward a battery cell holder including a first body and a second body that are coupled to a side of a battery cell and a battery pack.

Additional aspects of embodiments will be set forth in part in the description which follows and, in part, will be apparent from the description or may be learned by practice of the presented embodiments of the disclosure.

However, the technical problem to be solved by the present disclosure is not limited to the problem as described in one or more embodiments, and other problems not mentioned herein and aspects and features of the present disclosure that would address such problems will be clearly understood by those skilled in the art from the description of the present disclosure herein.

A battery cell holder according to one or more embodiments of the present disclosure is a battery cell holder to mount a battery cell therein and may include: a first body formed or provided at an upper portion and a lower portion of the battery cell, having a first set of exposure grooves to expose both electrode terminals (e.g., a first electrode terminal and a second electrode terminal) of the battery cell, and extending around a periphery of (e.g., being around or surrounding) a side of the battery cell; a second body formed or provided at the upper portion and the lower portion of the battery cell, having a second set of exposure grooves to expose both electrode terminals (e.g., a first electrode terminal and a second electrode terminal) of the battery cell, extending around a periphery of (e.g., being around or surrounding) another side of the battery cell, and coupled to the first body; a first electrode tab that contacts the first electrode terminal of the battery cell; and a second electrode tab that contacts the second electrode terminal of the battery cell.

In one or more embodiments, a shape in which the first body and the second body are coupled to each other may be hexagonal (e.g., substantially hexagonal) if (e.g., when) viewed from above. In one or more embodiments, the first body and the second body may be coupled to each other to form or provide a hexagonal (e.g., substantially hexagonal) shape if (e.g., when) viewed from above.

In one or more embodiments, the first electrode tab may be welded to a first electrode terminal of the battery cell.

In one or more embodiments, the first electrode tab may include: a protrusion that is partially cut and bent from the first electrode tab to protrude upward therefrom; and a welding hole at where the first electrode tab is welded to the first electrode terminal of the battery cell. In one or more embodiments, the protrusion protrudes upward by partially cutting and bending the first electrode tab.

In one or more embodiments, the first body may be formed or provided with (or may have) an insertion groove into which the second electrode tab is inserted, and the second electrode tab may be inserted into and coupled to the insertion groove of the first body.

In one or more embodiments, the second electrode tab may include a vertical (e.g., substantially vertical) plate having a terminal contact surface to contact the second electrode terminal of the battery cell and an insertion surface that is inserted into the insertion groove of the first body, and if (e.g., when) the insertion surface is inserted into the insertion groove of the first body, an upper portion of the insertion surface may be partially exposed. In one or more embodiments, the terminal contact surface may be formed or provided by bending a long vertical (e.g., substantially vertical) plate to contact the second electrode terminal of the battery cell.

In one or more embodiments, the insertion surface may include an extension portion that extends the upper portion of the insertion surface that is exposed if (e.g., when) the insertion surface is inserted into the insertion groove of the first body. In one or more embodiments, the insertion surface may extend to the upper portion of the insertion surface that is exposed if (e.g., when) the insertion surface is inserted into the insertion groove of the first body.

In one or more embodiments, at least one of the first body and the second body may have one or more cooling holes.

In one or more embodiments, the first body may include a coupling protrusion and a rail groove to slidably couple to another battery cell holder.

In one or more embodiments, the second body may include a coupling groove that corresponds to a coupling protrusion of said another battery cell holder and a rail protrusion that corresponds to a rail groove of said another battery cell holder.

A battery pack according to one or more embodiments of the present disclosure may include: a plurality of battery cells; and a plurality of battery cell holders to mount the plurality of battery cells therein, respectively, wherein each of the plurality of battery cell holders may include: a first body formed or provided at an upper portion and a lower portion of each of the plurality of battery cells, having a first set of exposure grooves to expose both electrode terminals (e.g., a first electrode terminal and a second electrode terminal) of the battery cell, and extending around a periphery of (e.g., being around or surrounding) a side of each of the plurality of battery cells; a second body formed or provided at the upper portion and the lower portion of each of the plurality of battery cells, having a second set of exposure grooves to expose both electrode terminals (e.g., a first electrode terminal and a second electrode terminal) of each of the plurality of battery cells, extending around a periphery of (e.g., being around or surrounding) another side of each of the plurality of battery cells, and coupled to the first body; a first electrode tab that contacts a first electrode terminal of each of the plurality of battery cells; and a second electrode tab that contacts a second electrode terminal of each of the plurality of battery cells.

In one or more embodiments, each of the plurality of battery cell holders may be hexagonal (e.g., substantially hexagonal) if (e.g., when) a shape in which the first body and the second body are coupled to each other is viewed from above. In one or more embodiments, the first body and the second body may be coupled to each other to form or provide a hexagonal (e.g., substantially hexagonal) shape if (e.g., when) viewed from above.

In one or more embodiments, the first electrode tab may be welded to a first electrode terminal of each of the plurality of battery cells.

In one or more embodiments, the first electrode tab may include: a protrusion that is partially cut and bent from the first electrode tab to protrude upward therefrom; and a welding hole at where the first electrode tab is welded to the first electrode terminal of each of the plurality of battery cells. In one or more embodiments, the protrusion protrudes upward by partially cutting and bending the first electrode tab.

In one or more embodiments, the first body may be formed or provided with (or may have) an insertion groove into which the second electrode tab is inserted, and the second electrode tab may be inserted into and coupled to the insertion groove of the first body.

In one or more embodiments, the second electrode tab may include a long vertical (e.g., substantially vertical) plate having a terminal contact surface to contact a second electrode terminal of each of the plurality of battery cells and an insertion surface that is inserted into the insertion groove of the first body, and if (e.g., when) the insertion surface is inserted into the insertion groove of the first body, an upper portion of the insertion surface may be partially exposed. In one or more embodiments, the terminal contact surface may be formed or provided by bending a long vertical (e.g., substantially vertical) plate to contact a second electrode terminal of each of the plurality of battery cells.

In one or more embodiments, the insertion surface may include an extension portion that extends the upper portion of the insertion surface that is exposed if (e.g., when) the insertion surface is inserted into the insertion groove of the first body. In one or more embodiments, the insertion surface may extend to the upper portion of the insertion surface that is exposed if (e.g., when) the insertion surface is inserted into the insertion groove of the first body.

In one or more embodiments, at least one of the first body and the second body may have one or more cooling holes.

In one or more embodiments, the first body may include a coupling protrusion and a rail groove to slidably couple to another battery cell holder.

In one or more embodiments, the second body may include a coupling groove that corresponds to a coupling protrusion of said another battery cell holder and a rail protrusion that corresponds to a rail groove of said another battery cell holder.

According to one or more embodiments of the present disclosure, a plurality of unit holders may be connected to form or provide a battery pack, and each of the plurality of unit holders may mount one battery cell.

According to one or more embodiments of the present disclosure, a first body and a second body may be coupled to the side of a battery cell (or the side of each of the plurality of battery cells) and have vertical (e.g., substantially vertical) parting edges, and the shape in which the first body and the second body are coupled to each other may be hexagonal (e.g., substantially hexagonal) if (e.g., when) viewed from above, thereby providing relatively high durability against external force and improving or enhancing the reliability of a battery pack.

At least some of the above and other features of the invention are set out in the claims.

According to one or more embodiments of the present disclosure, a battery pack may be relatively simply manufactured and repaired because a plurality of battery cell holders may be slidably coupled and vertically (e.g., substantially vertically) detachable, and thus replacement of individual battery cells may be feasible, so that workability may be improved or enhanced.

### BRIEF DESCRIPTION OF THE DRAWINGS

The accompanying drawings included in the present disclosure illustrate embodiments of the subject matter of the present disclosure and, together with the description, serve to explain principles of embodiments of subject matter of the present disclosure. Thus, the present disclosure should not be construed as being limited to the accompanying drawings:
FIG. 1A is a top perspective view of a cylindrical secondary battery;
FIG. 1B is a cross-sectional view of a cylindrical secondary battery;
FIG. 2A is an exploded view illustrating a shape in which a battery cell holder according to one or more embodiments of the present disclosure is coupled to a battery cell;
FIG. 2B is a coupling view of a battery cell holder according to one or more embodiments of the present disclosure;
FIG. 3A is a view illustrating a first body of a battery cell holder according to one or more embodiments of the present disclosure;
FIG. 3B is a bottom view illustrating a first body of a battery cell holder according to one or more embodiments of the present disclosure;
FIG. 4A is a view illustrating a second body of a battery cell holder according to one or more embodiments of the present disclosure;
FIG. 4B is a bottom view illustrating a second body of a battery cell holder according to one or more embodiments of the present disclosure;
FIG. 5A is a view illustrating a first electrode tab of a battery cell holder according to one or more embodiments of the present disclosure;
FIG. 5B is a plan view illustrating a first electrode tab of a battery cell holder according to one or more embodiments of the present disclosure;
FIG. 6A is a view illustrating a second electrode tab of a battery cell holder according to one or more embodiments of the present disclosure;
FIG. 6B is an enlarged view illustrating an extension portion of a second electrode tab of a battery cell holder according to one or more embodiments of the present disclosure; and
FIGS. 7A and 7B are views illustrating a battery pack according to one or more embodiments of the present disclosure.

### DETAILED DESCRIPTION

One or more embodiments of the present disclosure will be described herein in more detail with reference to the accompanying drawings. Prior to the description, it is noted that the terms or words used in the present disclosure and the appended claims and equivalents thereof should not be construed as being limited to common or dictionary meanings but instead should be understood to have meanings and concepts in agreement with the scope of the present disclosure based on the principle that an inventor may define the concept of each term suitably in order to describe his/her own invention in the best way possible. Accordingly, because one or more embodiments described in the present disclosure and the configurations or arrangements illustrated in the drawings are only an example of the present disclosure and they do not cover all the technical ideas and aspects of one or more embodiments of the present disclosure, it should be understood that one or more suitable changes and modifications may be made at the time of filing this application.

It will be further understood that the terms "has/includes" and/or "having/including" if (e.g., when) used herein, specify the presence of stated features, integers, steps, operations, elements, components, and/or groups thereof, but do not preclude the presence or addition of one or more other features, integers, steps, operations, elements, components, and/or groups thereof.

In the present disclosure, it will be understood that the term "comprise(s)/comprising," "include(s)/including," or "have/has/having" specifies the presence of stated features, integers, steps, operations, elements, and/or components, but do not preclude the presence or addition of one or more other features, integers, steps, operations, elements, components, and/or groups thereof. Additionally, the terms "comprise(s)/comprising," "include(s)/including," "have/has/having" or similar terms include or support the terms "consisting of" and "consisting essentially of," indicating the presence of stated features, integers, steps, operations, elements, and/or components, without or essentially without the presence of other features, integers, steps, operations, elements, components, and/or groups thereof.

In order to facilitate understanding of the present disclosure, the accompanying drawings are not drawn to scale, and the dimensions of one or more components may be exaggerated. It should be noted that the same reference numerals are designated to substantially the same components in different embodiments.

Reference to two compared elements, features, and/or the like as being "the same" indicates that they are "substantially the same". Therefore, the phrase "substantially the same" may include a deviation that is considered low in the art, for example, a deviation of 5% or less. The uniformity of any parameter in a given region may refer to that it is uniform (e.g., substantially uniform) from an average perspective.

Although the terms, such as "first" and/or "second", are used to describe one or more components, these components are not limited by these terms. These terms are only used to distinguish one component from another component. Thus, unless specifically stated to the contrary, a first component may be termed a second component without departing from the scope of the present disclosure.

Throughout the specification, unless otherwise stated, each element may be singular or plural.

Arrangement of any component "above (or below)" or "on (or under)" a component may refer to that any component is disposed in contact with the upper (or lower) surface of the component, as well as that other components may be between the element and any element on (or under) the element.

It will be understood that, if (e.g., when) a component is referred to as being "connected", "coupled", or "joined" to another component, not only may it be directly "connected", "coupled", or "joined" to the other element, but also may it be indirectly "connected", "coupled", or "joined" to the other element with other elements interposed therebetween.

As used herein, the term "and/or" includes any and all combinations of one or more of the associate listed items. The use of "may" if (e.g., when) describing embodiments of the present disclosure relates to "one or more embodiments of the present disclosure". Expressions, such as "at least one" and "one or more", preceding a list of elements modify the entire list of elements and do not modify the individual elements in the list.

Throughout the specification, if (e.g., when) "A and/or B" is stated, it refers to A, B, or A and B, unless otherwise stated. Also, if (e.g., when) "C to D" is stated, it refers to C or more and D or less, unless specifically stated to the contrary.

If (e.g., when) the phrase, such as "at least one of A, B, and C", "at least one of A, B, or C", "at least one selected from the group of A, B, and C", or "at least one selected from among A, B, and C", is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms "first," "second," "third," and/or the like may be used herein to describe one or more elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, a first component, a first region, a first layer, or a first section discussed below may be termed a second element, a second component, a second region, a second layer, or a second section without departing from the scope of the present disclosure.

For ease of explanation in describing the relationship of one element or feature to another element(s) or feature(s) as illustrated in the drawings, spatially relative terms, such as "beneath", "below", "lower", "above", and "upper", may be used herein. It will be understood that spatially relative positions are intended to encompass different directions of the device in use or operation in addition to the direction depicted in the drawings. For example, if (e.g., when) the device in the drawings is turned over, any element described as being "below" or "beneath" another element may then be oriented "above" or "over" another element. Therefore, the term "below" may encompass both upward and downward directions.

The terminology used herein is for the purpose of describing one or more embodiments of the present disclosure and is not intended to limit the scope of the present disclosure.

Unless otherwise defined, all terms (including technical and scientific terms) used herein have substantially the same meaning as generally understood by one of ordinary skill in the art to which the present disclosure belongs. It will be further understood that terms, such as those defined in dictionaries that are generally available or generally used, should be interpreted as having a meaning that is consistent with their meaning in the context of the relevant art and will not be interpreted in an idealized or overly formal sense unless expressly so defined herein.

Examples of secondary batteries include a coin type or kind, a cylindrical type or kind, a prismatic type or kind, and a pouch type or kind. The present disclosure may be applicable to a prismatic secondary battery. Therefore, the cylindrical secondary battery will first be described in more detail prior to description of embodiments of the present disclosure.

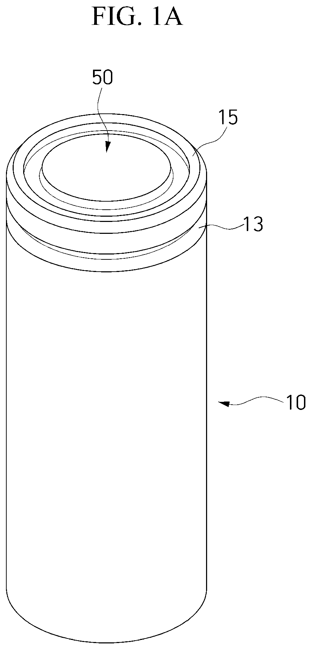

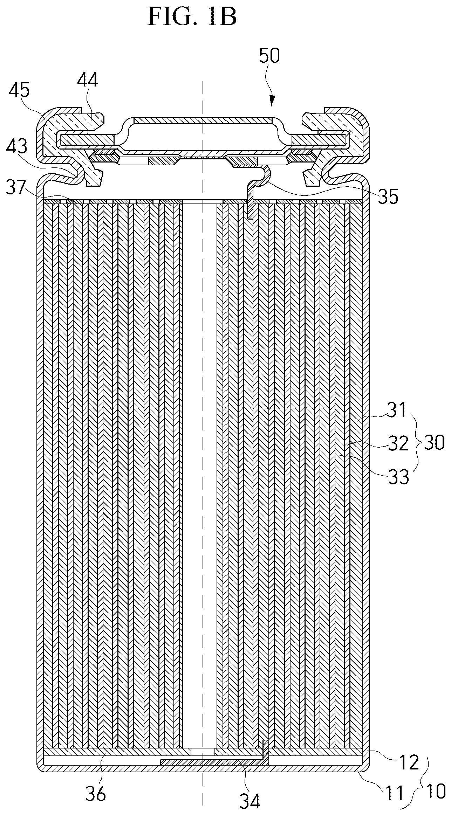

FIG. 1A is an upper perspective view of a cylindrical secondary battery. FIG. 1B is a cross-sectional view the cylindrical secondary battery.

Referring to FIGS. 1A and 1B, the cylindrical secondary battery may include an electrode assembly 30, a case 10 that accommodates the electrode assembly 30 and an electrolyte therein, a cap assembly 50 that is connected to an opening of the case 10 and that seals the case 10, and an insulating plate 37 between the electrode assembly 30 and the cap assembly 50 within the case 10.

The electrode assembly 30 may include a separator 32 and a first electrode 33 and the second electrode 31 with the separator 32 therebetween, and may be wound in a jelly-roll form.

The first electrode 33 may include a first base and a first active material layer in the first base. A first lead tap 35 may be extended from a first uncoated part that belongs to the first base and in which the first active material layer is not disposed or provided to the outside. The first lead tap 35 may be electrically connected to the cap assembly 50.

The second electrode 31 may include a second base and a second active material layer in the second base. A second lead tap 34 may be extended from a second uncoated part that belongs to the second base and in which the second active material layer is not disposed or provided to the outside. The second lead tap 34 may be electrically connected to the case 10. The first lead tap 35 and the second lead tap 34 may be extended in opposite (e.g., opposite facing) directions.

The first electrode 33 may function or serve as a positive electrode. In this case, the first base may be of aluminum foil, for example. The first active material layer may include transition metal oxide, for example. The second electrode 31 may function or serve as a negative electrode. In this case, the second base may be of copper foil and/or nickel foil, for example. The second active material layer may include graphite, for example.

The separator 32 may function or serve to permit a movement of lithium ions (or a flow of lithium ions) and to prevent the short-circuit of the first electrode 33 and the second electrode 31. The separator 32 may be of a polyethylene film, a polypropylene film, and/or a polyethylene-polypropylene film, for example. The case 10 may accommodate the electrode assembly 30 and an electrolyte and may form or provide an external form of the battery along with the cap assembly 50. The case 10 may include a body part 12 having a substantially cylindrical shape and a bottom part 11 connected to one side of the body part 12. A beading part 13 that has been deformed toward the inside of the body part 12 may be in the body part 12. A crimping part 15 that has been bent toward the inside of the body part 12 may be at an end of the body part 12 on the opening side.

The beading part 13 may suppress a movement (or reduce a degree or occurrence of a movement) of the electrode assembly 30 within the case 10 and may facilitate the settlement of a gasket 14 and the cap assembly 50. The crimping part 15 may firmly fix the cap assembly 50 by pressurizing an edge of the cap assembly 50 through the gasket 14. The case 10 may be made of iron plated with nickel, for example.

The cap assembly 50 may seal the case 10 by being fixed to the inside of the crimping part 15 through the gasket 14. The cap assembly 50 may include a cap-up part, a safety vent, a cap-down part, an insulating member, and a sub-plate, but embodiments of the present disclosure are not limited to such examples. The cap assembly 50 may be suitably deformed.

The cap-up part may be at the top of the cap assembly 50. The cap-up part may include a terminal part that upward convexly protrudes and that is configured to be connected to an external circuit. An output to discharge a gas around the terminal part may be in the cap-up part.

The safety vent may be under the cap-up part. The safety vent may include a protruding part that downward convexly protrudes and that is connected to the sub-plate, and at least one notch around the protruding part.

If (e.g., when) a gas is generated due to over-charging and/or an abnormal operation of the secondary battery, the protruding part may be upwardly deformed by the pressure of the gas and separated from the sub-plate. Furthermore, the safety vent may be cut (e.g. it may split) along the notch. The cut safety vent may prevent the explosion (or reduce a degree or occurrence of the explosion) of the secondary battery by discharging the gas to the outside.

The cap-down part may be under the safety vent. A first opening to expose the protruding part of the safety vent and a second opening to discharge a gas may be in the cap-down part. The insulating member may be between the safety vent and the cap-down part and may insulate the safety vent and the cap-down part.

The sub-plate may be under the cap-down part. The sub-plate may be fixed to the bottom of the cap-down part in order to close the first opening of the cap-down part. The protruding part of the safety vent may be fixed to the sub-plate. The first lead tap 35 that has been withdrawn from the electrode assembly 30 may be fixed to the sub-plate. Accordingly, the cap-up part, the safety vent, the cap-down part, and the sub-plate may be electrically connected to the first electrode 33 of the electrode assembly 30.

The insulating plate 37 may be disposed or provided to adjoin the electrode assembly 30 under the beading part 13. A tap opening to receive the first lead tap 35 may be provided in the insulating plate 37. The cap assembly 50 that has been electrically connected to the first electrode 33 by the first lead tap 35 may face the electrode assembly 30 with the insulating plate 37 therebetween. The cap assembly 50 may maintain or provide the state in which the cap assembly 50 has been insulated from the electrode assembly 30 by the insulating plate 37. The cylindrical secondary battery may include another insulating plate 36 for insulation between the electrode assembly 30 and the bottom part 11 of the case 10.

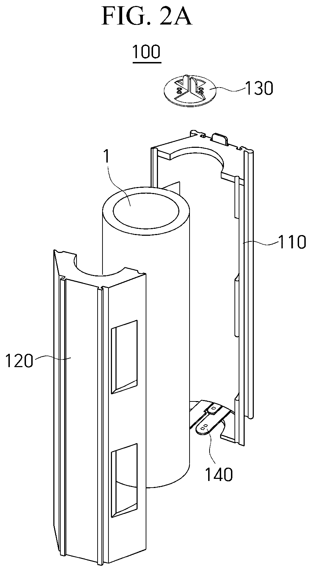

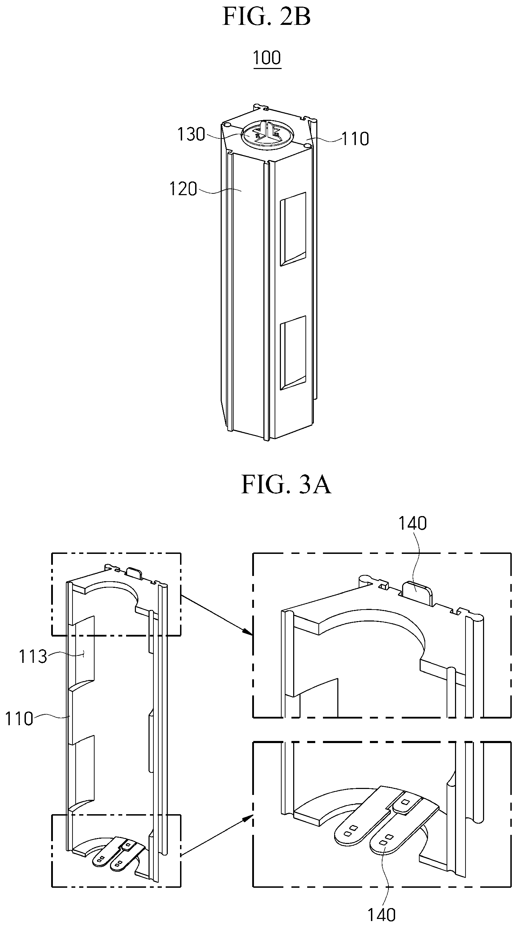

FIG. 2A is an exploded view illustrating a shape in which a battery cell holder according to one or more embodiments of the present disclosure is coupled to a battery cell, and FIG. 2B is a coupling view of the battery cell holder according to one or more embodiments of the present disclosure.

Referring to FIGS. 2A and 2B, a battery cell holder 100 according to one or more embodiments of the present disclosure may include a first body 110, a second body 120, a first electrode tab 130, and a second electrode tab 140. The battery cell holder 100 may mount a battery cell 1 therein.

The first body 110 may be formed or provided at the upper portion and the lower portion of the battery cell, having a first set of exposure grooves to expose both electrode terminals (e.g., a first electrode terminal and a second electrode terminal) of the battery cell 1, and be around (e.g., surround) the side of the battery cell 1.

The second body 120 may be formed or provided at the upper portion and the lower portion of the battery cell, having a second set of exposure grooves to expose both electrode terminals (e.g., a first electrode terminal and a second electrode terminal) of the battery cell 1, be around (e.g., surround) the side of the battery cell 1, and be coupled to the first body 110.

In one or more embodiments, the first body 110 and the second body 120 may each include a fastening protrusion and a fastening groove and may be fastened and coupled to each other as illustrated in FIG. 2B. In one or more embodiments, the fastening protrusion may have a hook shape (e.g., a substantially hook shape).

In one or more embodiments, as illustrated in FIG. 2B, the shape in which the first body 110 and the second body 120 are coupled to each other may be hexagonal (e.g., substantially hexagonal) if (e.g., when) viewed from above.

In one or more embodiments, the first body 110 and the second body 120 may be coupled to the side of the battery cell and have vertical (e.g., substantially vertical) parting edges, and the shape in which the first body 110 and the second body 120 are coupled to each other may be hexagonal (e.g., substantially hexagonal) if (e.g., when) viewed from above, thereby providing high durability against external force and improving or enhancing the reliability of a battery pack.

The set or specific configuration or arrangement of the battery cell holder according to one or more embodiments of the present disclosure is described with reference to the drawings below.

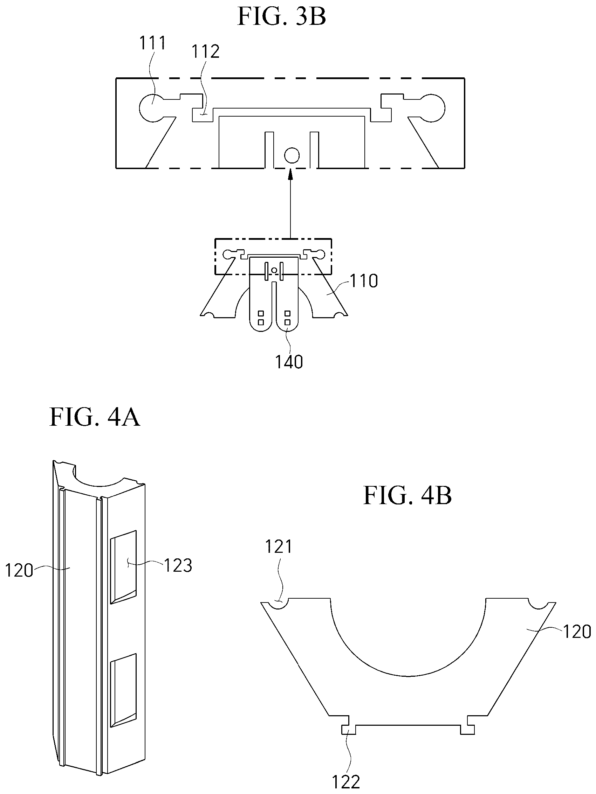

FIG. 3A is a view illustrating the first body of the battery cell holder according to one or more embodiments of the present disclosure, and FIG. 3B is a bottom view illustrating the first body of the battery cell holder according to one or more embodiments of the present disclosure.

Referring to FIG. 3A, the first body 110 may be formed or provided with (or may have) an insertion groove into which the second electrode tab 140 is inserted, and the second electrode tab 140 may be inserted into and coupled to the insertion groove of the first body 110. The second electrode tab 140 may be inserted into and coupled to the insertion groove, and the configuration or arrangement of the second electrode tab 140 may be formed or provided as one side of the battery cell holder 100, so that the battery cell holder 100 according to one or more embodiments of the present disclosure may have strong durability against external force. The set or specific configuration or arrangement of the second electrode tab 140 is described in one or more embodiments of the present disclosure.

In one or more embodiments, the first body 110 may include a coupling protrusion 111 and a rail groove 112 to slidably couple to another battery cell holder. The coupling protrusion 111 and the rail groove 112 may be slidably coupled to a coupling groove 121 and a rail protrusion 122 of the second body 120 as described in one or more embodiments of the present disclosure. As illustrated in FIG. 3B, the coupling protrusion 111 and the rail groove 112 may be formed or provided at a corner of the first body 110.

In one or more embodiments, the first body 110 may have one or more cooling holes 113. The battery cell holder 100 according to one or more embodiments of the present disclosure may cool heat by contacting the air through the cooling holes 113 even though the heat is generated in the mounted battery cell 1. In one or more embodiments, the cooling hole 113 may be on the side of the first body 110 in a rectangular (e.g., substantially rectangular) shape.

FIG. 4A is a view illustrating the second body of the battery cell holder according to one or more embodiments of the present disclosure, and FIG. 4B is a bottom view illustrating the second body of the battery cell holder according to one or more embodiments of the present disclosure.

Referring to FIGS. 4A and 4B, the second body 120 may include the coupling groove 121 that corresponds to the coupling protrusion 111 of another battery cell holder and the rail protrusion 122 that corresponds to the rail groove 112 of another battery cell holder. The coupling groove 121 and the rail protrusion 122 may be slidably coupled to the coupling protrusion 111 and the rail groove 112 of the first body 110. As illustrated in FIG. 4B, the coupling groove 121 and the rail protrusion 122 may be at a corner of the second body 120.

In one or more embodiments, the second body 120 may have one or more cooling holes 123 similar to the first body 110. The battery cell holder 100 according to one or more embodiments of the present disclosure may cool heat by contacting the air through the cooling holes 123 even though the heat is generated in the mounted battery cell 1. In one or more embodiments, the cooling hole 123 may be on the side of the second body 120 in a rectangular (e.g., substantially rectangular) shape.

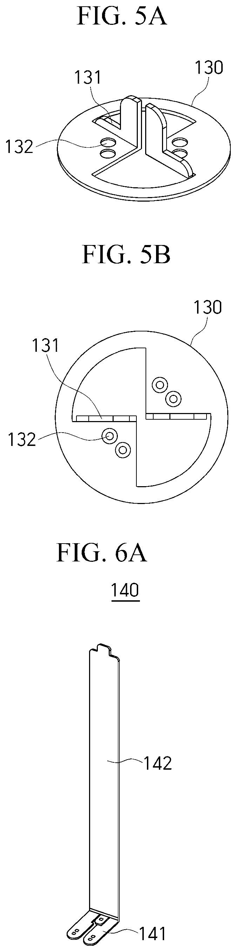

FIG. 5A is a view illustrating the first electrode tab of the battery cell holder according to one or more embodiments of the present disclosure, and FIG. 5B is a plan view illustrating the first electrode tab of the battery cell holder according to one or more embodiments of the present disclosure.

Referring to FIGS. 5A and 5B, the first electrode tab 130 may be formed or provided as a flat (e.g., substantially flat) plate having a circular (e.g., substantially circular) shape. The first electrode tab 130 may be welded to a first electrode terminal of the battery cell 1. In one or more embodiments, the first electrode terminal of the battery cell 1 welded to the first electrode tab 130 may be a positive terminal.

In one or more embodiments, the first electrode tab 130 may include a protrusion 131 that is partially cut and bent from the first electrode tab 130 to protrude upward therefrom and welding holes 132 at where the first electrode tab 130 is welded to the first electrode terminal of the battery cell 1. In one or more embodiments, the protrusion 131 protrudes upward by partially cutting and bending the first electrode tab 130.

The first electrode tab 130 may be manufactured from a plate material, having a circular (e.g., substantially circular) outer shape, having a portion of the center being cut and bent to form or provide the interior.

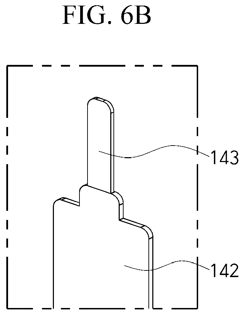

FIG. 6A is a view illustrating the second electrode tab of the battery cell holder according to one or more embodiments of the present disclosure, and FIG. 6B is a plan view illustrating an extension portion of the second electrode tab of the battery cell holder according to one or more embodiments of the present disclosure.

Referring to FIG. 6A, the second electrode tab 140 may include a long vertical (e.g., substantially vertical) plate having a terminal contact surface 141 to contact a second electrode terminal of the battery cell 1 and an insertion surface 142 that is inserted into the insertion groove of the first body. In one or more embodiments, the second electrode terminal of the battery cell 1 that contacts the second electrode tab 140 may be a negative terminal. In one or more embodiments, the terminal contact surface 141 may be formed or provided by bending a long vertical (e.g., substantially vertical) plate to contact a second electrode terminal of the battery cell 1.

In one or more embodiments, if (e.g., when) the insertion surface 142 is inserted into the insertion groove of the first body 110, an upper portion of the insertion surface 142 may be partially exposed. In this way, a part of the insertion surface 142 may be exposed to the upper portion of the battery cell holder 100 according to one or more embodiments of the present disclosure, thereby allowing both polarities to be exposed to the upper portion of the battery cell holder 100.

As illustrated in FIG. 6B, the insertion surface 142 of the second electrode tab 140 may include an extension portion 143 that extends the upper portion of the insertion surface that is exposed if (e.g., when) the insertion surface 142 is inserted into the insertion groove of the first body 110. In one or more embodiments, the insertion surface 142 of the second electrode tab 140 may extend to the upper portion of the insertion surface 142 that is exposed if (e.g., when) the insertion surface 142 is inserted into the insertion groove of the first body 110. The insertion surface 142 may include the extension portion 143, so that the insertion surface 142 may be relatively easily connected to a printed circuit board (PCB) or may be relatively easily connected to another battery cell holder 100 on the insertion surface 142 if (e.g., when) configuring or arranging a two-stage coverlay.

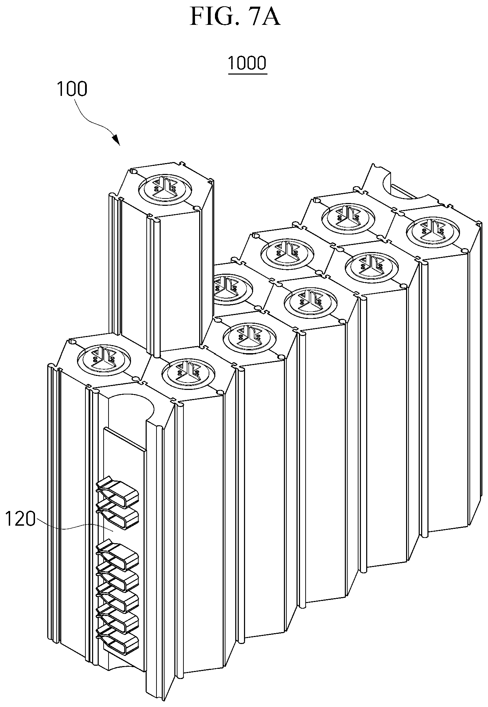

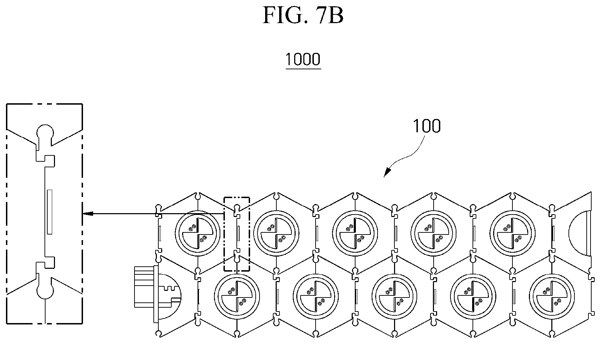

FIGS. 7A and 7B are views illustrating a battery pack according to one or more embodiments of the present disclosure.

FIGS. 7A and 7B illustrate a shape of a battery pack 1000 in which a plurality of battery cell holders 100 provided with a plurality of battery cells 1 are coupled to one another.

As illustrated in FIGS. 7A and 7B, in the battery pack 1000 according to one or more embodiments of the present disclosure, the battery cell holder 100 may include the coupling protrusion 111, the coupling groove 121 that corresponds to the coupling protrusion 111, the rail groove 112, and the rail protrusion 122 that corresponds to the rail groove 112, so that the individual battery cell holders 100 are vertically (e.g., substantially vertically) detachable. In this way, the battery pack 1000 according to one or more embodiments of the present disclosure may be relatively simply manufactured and repaired because the plurality of battery cell holders 100 are slidably coupled and vertically (e.g., substantially vertically) detachable, and thus individual replacement of the battery cells may be feasible, so that workability may be improved or enhanced.

In one or more embodiments, as illustrated in FIG. 7B, in the battery pack 1000 according to one or more embodiments of the present disclosure, the plurality of battery cell holders 100 have a mutually complementary support structure through a hexagonal (e.g., substantially hexagonal) shape and thus have strong durability against external force, thereby improving or enhancing the reliability of the battery pack 1000.

Hereinafter, materials which may be used in a secondary battery according to one or more embodiments of the present disclosure are described.

A compound (e.g., a lithiated intercalation compound) capable of reversible intercalation and deintercalation of lithium may be used as a positive electrode active material. For example, one type or kind or more selected from among complex oxides of metal, selected from among cobalt, manganese, nickel, and a combination of them, and lithium may be used as the positive electrode active material.

The complex oxide may be lithium transition metal complex oxide. A more detailed example of the complex oxide may include lithium nickel-based oxide, lithium cobalt-based oxide, lithium manganese-based oxide, a lithium ferrous phosphate-based compound, cobalt-free nickel-manganese-based oxide, or a combination of them.

For example, a compound that is represented as one selected from among the following chemical formulas may be used: LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); and LiₐFePO₄ (0.90≤a≤1.8).

In the foregoing chemical formulae, A may be nickel (Ni), cobalt (Co), manganese (Mn), or a combination of them. X may be aluminum (Al), Ni, Co, Mn, chromium (Cr), iron (Fe), magnesium (Mg), strontium (Sr), vanadium (V), a rare earth element, or a combination of them; D may be oxygen (O), fluorine (F), sulfur (S), phosphorus (P), or a combination of them. G may be Al, Cr, Mn, Fe, Mg, lanthanum (La), cerium (Ce), Sr, V, or a combination of them. L¹ may be Mn, Al, or a combination of them.

A positive electrode for a lithium secondary battery may include a current collector and a positive electrode active material layer on the current collector. The positive electrode active material layer may include the positive electrode active material and may further include a binder and/or a conductive (e.g., electrically conductive) material.

The content (e.g., amount) of the positive electrode active material may be about 90 wt% to about 99.5 wt% based on 100 wt% of the positive electrode active material layer. The content (e.g., amount) of the binder and the conductive (e.g., electrically conductive) material may be about 0.5 wt% to about 5 wt% based on 100 wt% of the positive electrode active material layer.

Aluminum (Al) may be used as the current collector, but embodiments of the present disclosure are not limited thereto.

A negative electrode active material may include a material capable of reversible intercalation/de-intercalation with respect to lithium ions, lithium metal, an alloy of lithium metal, a material capable of doping and dedoping with respect to lithium, or transition metal oxide.

The material capable of reversible intercalation/de-intercalation with respect to lithium ions may include a carbon-based negative electrode active material, for example, crystalline carbon, amorphous (e.g., non-crystalline) carbon, or a combination of them. An example of the crystalline carbon may include graphite, such as natural graphite and/or synthetic graphite. Examples of the amorphous (e.g., non-crystalline) carbon may include soft carbon, hard carbon, mesophase pitch carbide, and/or fired coke.

A silicon (Si)-based negative electrode active material and/or a tin (Sn)-based negative electrode active material may be used as the material capable of doping and dedoping with respect to lithium. The Si-based negative electrode active material may be silicon, a silicon-carbon composite, silicon oxide (e.g., SiOₓ, where 0 < x ≤ 2; e.g., SiO₂), a Si-based alloy, or a combination of them.

The silicon-carbon composite may be a composite of silicon and amorphous (e.g., non-crystalline) carbon. According to one or more embodiments, the silicon-carbon composite may include silicon particles, and may have a form in which amorphous (e.g., non-crystalline) carbon has been coated on surfaces of silicon particles.

The silicon-carbon composite may further include crystalline carbon. For example, the silicon-carbon composite may include a core including crystalline carbon and silicon particles, and an amorphous (e.g., non-crystalline) carbon coating layer on a surface of the core.

A negative electrode for a lithium secondary battery may include a current collector and a negative electrode active material layer on the current collector. The negative electrode active material layer may include the negative electrode active material and may further include a binder and/or a conductive (e.g., electrically conductive) material.

For example, the negative electrode active material layer may include the negative electrode active material of about 90 wt% to about 99 wt%, the binder of about 0.5 wt% to about 5 wt%, and the conductive (e.g., electrically conductive) material of about 0 wt% to about 5 wt%.

A nonaqueous (e.g., water-insoluble)-based binder, an aqueous (e.g., watersoluble)-based binder, a dry binder, or a combination of them may be used as the binder. If (e.g., when) the aqueous (e.g., water-soluble)-based binder is used as a binder for the negative electrode, the binder for the negative electrode may further include a cellulose-series compound (or a cellulose-based compound) capable of assigning or increasing viscosity.

One selected from among nickel foil, stainless steel foil, titanium foil, nickel foam, copper foam, a polymer base (or a polymer derivative) on which a conductive (e.g., electrically conductive) metal has been coated, and a combination of them may be used as a current collector for the negative electrode.

An electrolyte for a lithium secondary battery may include a nonaqueous (e.g., water-insoluble) organic solvent and lithium salts.

The nonaqueous (e.g., water-insoluble) organic solvent may play a role as a medium through which ions that are involved in an electrochemical reaction of a battery may move.

The nonaqueous (e.g., water-insoluble) organic solvent may be a carbonate-based solvent, an ester-based solvent, an ether-based solvent, a ketone-based solvent, an alcohol-based solvent, an aprotic solvent, or a combination of them. The carbonate-based solvent, the ester-based solvent, the ether-based, the ketone-based solvent, the alcohol-based solvent, or the aprotic solvent may be used solely, or two types or kinds or more of them may be mixed and used as the nonaqueous (e.g., water-insoluble) organic solvent.

Furthermore, if (e.g., when) the carbonate-based solvent is used, annular carbonate and chain carbonate may be mixed and used.

A separator may be between the positive electrode and the negative electrode depending on the type or kind of lithium secondary battery. Polyethylene, polypropylene, and polyvinylidene fluoride, or a multi-layer having two or more layers of them may be used as the separator.

The separator may include a porous base, and a coating layer including an organic matter, an inorganic matter, or a combination of them that is on one side or both sides (e.g., two opposing sides) of the porous base.

The organic matter may include a polyvinylidene fluoride-based heavy antibody and/or a (meth)acrylic polymer.

The inorganic matter may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination of them, but embodiments of the present disclosure are not limited thereto.

The organic matter and the inorganic matter may have a form in which the organic matter and the inorganic matter have been mixed in one coating layer or a form in which a coating layer including the organic matter and a coating layer including the inorganic matter have been stacked.

Embodiments are set out in the following clauses:
Clause 1. A battery cell holder for mounting a battery cell therein, comprising:
   a first body formed at upper and lower portions thereof with exposure grooves so that both electrode terminals of the battery cell are exposed, and surrounding a side of the battery cell;
   a second body formed at upper and lower portions thereof with exposure grooves so that both electrode terminals of the battery cell are exposed, surrounding a side of the battery cell, and coupled to the first body;
   a first electrode tab that makes contact with a first electrode terminal of the battery cell; and
   a second electrode tab that makes contact with a second electrode terminal of the battery cell.
   Clause 2. The battery cell holder as claimed in clause 1, wherein a shape in which the first body and the second body are coupled to each other is hexagonal when viewed from above.
Clause 3. The battery cell holder as claimed in clause 1 or clause 2, wherein the first electrode tab is welded to a first electrode terminal of the battery cell.
Clause 4. The battery cell holder as claimed in clause 3, wherein the first electrode tab comprises:
   a protrusion protruding upward by partially cutting and bending the first electrode tab; and
   a welding hole to be welded to the first electrode terminal of the battery cell.
Clause 5. The battery cell holder as claimed in any one of clauses 1 to 4, wherein the first body is formed with an insertion groove into which the second electrode tab is inserted, and
   the second electrode tab is inserted into and coupled to the insertion groove of the first body.
Clause 6. The battery cell holder as claimed in clause 5, wherein the second electrode tab comprises a terminal contact surface that is formed by bending a long vertical plate to make contact with a second electrode terminal of the battery cell and an insertion surface that is inserted into the insertion groove, and
   when the insertion surface is inserted into the insertion groove of the first body, an upper portion of the insertion surface is partially exposed.
Clause 7. The battery cell holder as claimed in clause 6, wherein the insertion surface comprises an extension portion that extends the upper portion that is exposed when the insertion surface is inserted into the insertion groove of the first body.
Clause 8. The battery cell holder as claimed in any one of clauses 1 to 7, wherein the first body or the second body is formed with one or more cooling holes.
Clause 9. The battery cell holder as claimed in any one of clauses 1 to 8, wherein the first body comprises a coupling protrusion and a rail groove for slidably coupling to another battery cell holder.
Clause 10. The battery cell holder as claimed in clause 9, wherein the second body comprises a coupling groove corresponding to a coupling protrusion of the another battery cell holder and a rail protrusion corresponding to a rail groove of the another battery cell holder.
Clause 11. A battery pack comprising:
   a plurality of battery cells; and
   a plurality of battery cell holders for mounting the plurality of battery cells therein, respectively,
   wherein each of the battery cell holders comprises:
      a first body formed at upper and lower portions thereof with exposure grooves so that both electrode terminals of the battery cell are exposed, and surrounding a side of the battery cell;
      a second body formed at upper and lower portions thereof with exposure grooves so that both electrode terminals of the battery cell are exposed, surrounding a side of the battery cell, and coupled to the first body;
      a first electrode tab that makes contact with a first electrode terminal of the battery cell; and
      a second electrode tab that makes contact with a second electrode terminal of the battery cell.
Clause 12. The battery pack as claimed in clause 11, wherein the battery cell holder is hexagonal when a shape in which the first body and the second body are coupled to each other is viewed from above.
Clause 13. The battery pack as claimed in clause 11 or clause 12, wherein the first electrode tab is welded to a first electrode terminal of the battery cell.
Clause 14. The battery pack as claimed in clause 13, wherein the first electrode tab comprises:
   a protrusion protruding upward by partially cutting and bending the first electrode tab; and
   a welding hole to be welded to the first electrode terminal of the battery cell.
Clause 15. The battery pack as claimed in clause 14, wherein the first body is formed with an insertion groove into which the second electrode tab is inserted, and
   the second electrode tab is inserted into and coupled to the insertion groove of the first body.
Clause 16. The battery pack as claimed in clause 15, wherein the second electrode tab comprises a terminal contact surface that is formed by bending a long vertical plate to make contact with a second electrode terminal of the battery cell and an insertion surface that is inserted into the insertion groove, and
   when the insertion surface is inserted into the insertion groove of the first body, an upper portion of the insertion surface is partially exposed.
Clause 17. The battery pack as claimed in clause 16, wherein the insertion surface comprises an extension portion that extends the upper portion that is exposed when the insertion surface is inserted into the insertion groove of the first body.
Clause 18. The battery pack as claimed in any one of clauses 11 to 17, wherein the first body or the second body is formed with one or more cooling holes.
Clause 19. The battery pack as claimed in any one of clauses 11 to 18, wherein the first body comprises a coupling protrusion and a rail groove for slidably coupling to another battery cell holder.
Clause 20. The battery pack as claimed in clause 19, wherein the second body comprises a coupling groove corresponding to a coupling protrusion of the another battery cell holder and a rail protrusion corresponding to a rail groove of the another battery cell holder.

While the subject matter of the present disclosure has been described in connection with what is presently considered to be practical embodiments, it is to be understood that the present disclosure is not limited to the disclosed embodiments. In contrast, it is intended to cover one or more suitable modifications and equivalent arrangements included within the scope of the appended claims and equivalents thereof. It therefore will be understood that one or more embodiments described above are just illustrative but not limitative in all aspects.

## Claims

1. A battery cell holder for mounting a battery cell therein, the battery cell holder comprising:
a first body at an upper portion and a lower portion of the battery cell, having a first set of exposure grooves to expose a first electrode terminal and a second electrode terminal of the battery cell, and extending around a periphery of a side of the battery cell;
a second body coupled to the first body, at the upper portion and the lower portion of the battery cell, having a second set of exposure grooves to expose the first electrode terminal and the second electrode terminal of the battery cell, and extending around a periphery of another side of the battery cell;
a first electrode tab contacting the first electrode terminal of the battery cell; and
a second electrode tab contacting the second electrode terminal of the battery cell.

2. The battery cell holder as claimed in claim 1, wherein the first body and the second body are coupled to each other to form a hexagonal shape when viewed from above.

3. The battery cell holder as claimed in claim 1 or claim 2, wherein the first electrode tab is welded to the first electrode terminal of the battery cell.

4. The battery cell holder as claimed in claim 3, wherein the first electrode tab comprises:
a protrusion that is partially cut and bent from the first electrode tab to protrude upward therefrom; and
a welding hole at where the first electrode tab is welded to the first electrode terminal of the battery cell.

5. The battery cell holder as claimed in any one of the preceding claims,
wherein the first body has an insertion groove into which the second electrode tab is inserted, and
wherein the second electrode tab is inserted into and coupled to the insertion groove of the first body.

6. The battery cell holder as claimed in claim 5, wherein the second electrode tab comprises a vertical plate having a terminal contact surface to contact the second electrode terminal of the battery cell and an insertion surface that is inserted into the insertion groove of the first body, and
when the insertion surface is inserted into the insertion groove of the first body, an upper portion of the insertion surface is partially exposed.

7. The battery cell holder as claimed in claim 6, wherein the insertion surface comprises an extension portion that extends the upper portion of the insertion surface that is exposed when the insertion surface is inserted into the insertion groove of the first body.

8. The battery cell holder as claimed in any one of the preceding claims, wherein at least one of the first body and the second body has a cooling hole.

9. The battery cell holder as claimed in any one of the preceding claims, wherein the first body comprises a coupling protrusion and a rail groove to slidably couple to another battery cell holder.

10. The battery cell holder as claimed in claim 9, wherein the second body comprises a coupling groove that corresponds to a coupling protrusion of the other battery cell holder and a rail protrusion that corresponds to a rail groove of the other battery cell holder.

11. A battery pack comprising:
a plurality of battery cells; and
a plurality of battery cell holders, the plurality of battery cells being mounted therein, respectively,
wherein each of the plurality of battery cell holders comprises:
a first body at an upper portion and a lower portion of each of the plurality of battery cells, having a first set of exposure grooves to expose a first electrode terminal and a second electrode terminal of the each of the plurality of battery cells, and extending around a periphery of a side of the each of the plurality of battery cells;
a second body coupled to the first body, at the upper portion and the lower portion of the each of the plurality of battery cells, having a second set of exposure grooves to expose the first electrode terminal and the second electrode terminal of the each of the plurality of battery cells, and extending around a periphery of another side of the each of the plurality of battery cells;
a first electrode tab contacting the first electrode terminal of the each of the plurality of battery cells; and
a second electrode tab contacting the second electrode terminal of the each of the plurality of battery cells.

12. The battery pack as claimed in claim 11, wherein the first body and the second body are coupled to each other to form a hexagonal shape when viewed from above.

13. The battery pack as claimed in claim 11 or claim 12, wherein the first electrode tab is welded to the first electrode terminal of the each of the plurality of battery cells, and optionally wherein the first electrode tab comprises:
a protrusion that is partially cut and bent from the first electrode tab to protrude upward therefrom; and
a welding hole at where the first electrode tab is welded to the first electrode terminal of the each of the plurality of battery cells;
and optionally wherein the first body has an insertion groove into which the second electrode tab is inserted, and the second electrode tab is inserted into and coupled to the insertion groove of the first body;
and optionally wherein the second electrode tab comprises a vertical plate having a terminal contact surface to contact the second electrode terminal of the each of the plurality of battery cells and an insertion surface that is inserted into the insertion groove of the first body, and when the insertion surface is inserted into the insertion groove of the first body, an upper portion of the insertion surface is partially exposed;
and optionally wherein the insertion surface comprises an extension portion that extends the upper portion of the insertion surface that is exposed when the insertion surface is inserted into the insertion groove of the first body.

14. The battery pack as claimed in any one of claims 11 to 13, wherein at least one of the first body and the second body has a cooling hole.

15. The battery pack as claimed in any one of claims 11 to 14, wherein the first body comprises a coupling protrusion and a rail groove to slidably couple to another battery cell holder, and optionally wherein the second body comprises a coupling groove that corresponds to a coupling protrusion of the other battery cell holder and a rail protrusion that corresponds to a rail groove of the other battery cell holder.
